# EUROPÄISCHE PATENTSCHRIFT

(11) **EP 1 925 588 B1**
(45) Veröffentlichungstag und Bekanntmachung des Hinweises auf die Patenterteilung: **19.01.2011**
(21) Anmeldenummer: 07021206.3
(22) Anmeldetag: 30.10.2007
(51) Int. Cl.: B66F 9/075, B60K 1/04

(54) **Gabelstapler mit einer Führung zum seitlichen Ausziehen eines Batterieblocks**
Fork-lift truck with a guide for removing a battery laterally
Chariot élévateur à fourche doté d'un guidage destiné à l'extraction latérale d'un bloc de batterie

(30) Priorität: 23.11.2006 DE 102006055363
(43) Veröffentlichungstag der Anmeldung: 28.05.2008
(73) Patentinhaber: STILL GmbH, 22113 Hamburg (DE)
(72) Erfinder: Strugg, Gerald., Xiamen 361009 (CN); Bavendiek, Rainer, Dr., 21465 Wentorf (DE); Bergmann, Ansgar, 22941 Bargteheide (DE); Evert, Rainer, 22939 Rausdorf (DE); Lundelius, Jens, 22929 Schönberg (DE)
(74) Vertreter: Geirhos, Johann

(56) Entgegenhaltungen:
- EP-A- 1 661 847
- DE-A1-102005 022 094

## Beschreibung

Die Erfindung betrifft einen Gabelstapler mit einem Fahrzeugrahmen, der eine seitliche Entnahmeöffnung für einen Batterieblock aufweist, wobei für den Batterieblock eine Aufstandsfläche vorgesehen ist, welche mittels einer Führung zwischen einer Betriebsposition, in der sich die Aufstandsfläche vollständig innerhalb des Fahrzeugrahmens befindet, und einer Batteriewechselposition, in der sich die Aufstandsfläche vollständig außerhalb des Fahrzeugrahmens befindet, bewegbar ist.

Gabelstapler, insbesondere Gegengewichtsgabelstapler, sind insbesondere in jüngerer Zeit häufig mit einer seitlichen Batterieentnahmeöffnung ausgeführt. Um den Batterieblock zu wechseln, wird der im Gabelstapler vorhandene Batterieblock in horizontaler Richtung aus dem Batteriefach des Gabelstaplers heraus bewegt. Dies kann beispielsweise mittels eines Gabelhubwagens geschehen, mit dem der im Gabelstapler befindliche Batterieblock unterfahren, geringfügig angehoben und dann aus dem Batteriefach heraus gefahren wird.

Gleichermaßen üblich ist es bei den Betreibern von Gabelstaplern, die Batterieblöcke mittels eines Krans zu transportieren. Um dies bei Gabelstaplern mit einer seitlichen Batterieentnahmeöffnung zu ermöglichen, muss der Batterieblock zunächst vollständig aus dem Batteriefach heraus bewegt werden. Erst dann kann der Batterieblock an den Kran angehängt und angehoben werden. Analog hierzu kann während des Einsetzens in das Batteriefach der Batterieblock mittels des Krans nur neben die Entnahmeöffnung bewegt werden. Um den Batterieblock dann in horizontaler Richtung durch die Entnahmeöffnung in das Batteriefach zu bewegen, bedarf es einer Hilfsvorrichtung.

Hilfsvorrichtungen, die es erlauben, den Batterieblock ohne Zuhilfenahme eines Gabelhubwagens in horizontaler Richtung in das Batteriefach hinein oder aus dem Batteriefach heraus zu bewegen, sind im Stand der Technik bereits bekannt. In der DE 102 40 854 A1 ist beispielsweise beschrieben, unten im Batteriefach eine ausziehbare Rollenbahn anzuordnen. Nach dem Ausziehen der Rollenbahn kann der Batterieblock auf der Rollenbahn vollständig aus dem Batteriefach heraus gerollt werden.

Aus der EP 1 661 847 A1 ist ein gattungsgemäßer Gabelstapler mit einem seitlichen Batteriewechsel bekannt, bei dem der Batterieblock auf einer Aufstandsfläche aufsteht, die mittels einer als Rollenbahn ausgebildeten teleskopischen Führung vollständig seitlich aus dem Batteriefach herausbewegt werden kann. Die teleskopische Führung besteht aus Führungsschienen, die am Fahrzeugrahmen angeordnet sind, Führungsschienen, die an der Aufstandsfläche angeordnet sind, und einem mit Rollen versehenen Rollenträger, wobei äußere Rollen des Rollenträgers in den Führungsschienen am Fahrzeugrahmen geführt sind und innere Rollen des Rollenträgers in den Führungsschienen der Aufstandsfläche geführt sind.

Die bekannten, in den Gabelstapler integrierten Hilfsvorrichtungen erfordern in der Herstellung einen großen Bauaufwand und beanspruchen viel Bauraum innerhalb des Batteriefachs.

Der vorliegenden Erfindung liegt die Aufgabe zugrunde, einen Gabelstapler mit einer einfach aufgebaute Hilfsvorrichtung zur horizontalen Batterieentnahme zur Verfügung zu stellen, die innerhalb des Gabelstaplers wenig Bauraum beansprucht.

Diese Aufgabe wird erfindungsgemäß dadurch gelöst, dass die Führung als teleskopische Gleitführung ausgebildet ist, wobei ein Grundelement der Führung starr mit dem Fahrzeugrahmen verbunden ist, ein erstes Teleskopelement an dem Grundelement mittels eines ersten Gleitelements bewegbar geführt ist und ein zweites Teleskopelement an dem ersten Teleskopelement mittels eines zweiten Gleitelements bewegbar geführt ist und die Aufstandsfläche an dem zweiten Teleskopelement befestigt ist. Die teleskopische Ausführung der Führung mit zwei Teleskopelementen gewährleistet die erforderliche Ausfahrlänge der Führung, um den Batterieblock zwischen einer Position, in der er sich vollständig innerhalb des Gabelstaplers befindet und einer weiteren Position, in der er sich vollständig außerhalb des Gabelstaplers befindet, bewegen zu können. Das Grundelement, das erste Teleskopelement und das zweite Teleskopelement können jeweils ein- oder mehrteilig ausgeführt sein, wobei insbesondere mehrere Teile, die in Längsrichtung des Gabelstaplers voneinander beabstandet sind und in der Regel immer synchron bewegt werden, als zusammengehörend angesehen werden. Gleiches gilt für die Gleitelemente, wobei jedes Gleitelement in der Regel immer aus mehreren in Längsrichtung des Gabelstaplers versetzen Teilen besteht. Darüber hinaus kann jedes Gleitelement auch aus mehreren in Querrichtung des Gabelstaplers versetzten Teilen bestehen, die bei einer Ausfahrbewegung der Teleskopelemente relativ zueinander bewegt werden.

Mit besonderem Vorteil ermöglicht das erste Gleitelement eine im Wesentlichen horizontale Linearbewegung des ersten Teleskopelements und eine Schwenkbewegung des ersten Teleskopelements um eine im Wesentlichen horizontale Achse. Die im Wesentlichen horizontale Linearbewegung erfolgt in Querrichtung des Gabelstaplers und entspricht der Ausfahr- bzw. Einfahrbewegung des Teleskopelements. Die darüber hinaus durch das erste Gleitelement ermöglichte Schwenkbewegung erlaubt ein zumindest geringfügiges Neigen des Teleskopelements nach oben oder nach unten. Dies ermöglicht einen Winkelausgleich, insbesondere in den Fällen, wenn die Fahrbahn unter dem Gabelstapler und/oder unter der Rollenbahn nicht eben oder nicht waagrecht ist.

Das erste Gleitelement ist an dem - bei vollständig eingeschobener Aufstandsfläche von der Entnahmeöffnung aus betrachtet - hinteren Ende des ersten Teleskopelements befestigt. Das erste Gleitelement ist relativ zum ersten Teleskopelement nicht beweglich. Bei einem Aus- und Einfahren des ersten Teleskopelements wird das erste Gleitelement relativ zum Grundelement verschoben.

Weiter ist ein Abstützelement vorgesehen, das an dem ersten Teleskopelement angeordnet ist und mit dem ein Teil der Gewichtskraft des Batterieblocks an dem Grundelement abstützbar ist. Bei vollständig eingeschobener Aufstandsfläche wird die Gewichtskraft des Batterieblocks über das erste Gleitelement und über das Abstützelement auf dem Grundelement abgestützt. Nach einem Ausziehen des ersten Teleskopelements befindet sich das Abstützelement nicht mehr über dem Grundelement und hat in dieser Stellung dann keine Funktion.

Das Abstützelement ist an dem - bei vollständig eingeschobener Aufstandsfläche von der Entnahmeöffnung aus betrachtet - vorderen Ende des ersten Teleskopelements befestigt.

Um bei ausgefahrener Aufstandsfläche ein Kippen des Gabelstaplers oder ein Abknicken der teleskopischen Gleitführung zu vermeiden, ist eine ausfahrbare Stütze vorgesehenen, die an dem zweiten Teleskopelement angeordnet ist und mit der ein Teil der Gewichtskraft des Batterieblocks an einer Fahrbahn abstützbar ist. Die Stütze ist an dem zweiten Teleskopelement befestigt. Bei eingeschobener Aufstandsfläche ist die Stütze eingefahren und befindet sich innerhalb des Batteriefachs. Während der Ausfahrbewegung der Aufstandsfläche wird die Stütze nach unten ausgefahren, sobald sie sich vollständig außerhalb des Gabelstaplers befindet. Die ausgefahrene Stütze stützt das zweite Teleskopelement an der Fahrbahn ab und nimmt dabei zumindest einen Teil der Gewichtskraft des Batterieblocks auf.

Das zweite Gleitelement ermöglicht ausschließlich eine im Wesentlichen horizontale Linearbewegung des zweiten Teleskopelements relativ zum ersten Teleskopelement. Eine Rotationsbewegung der beiden Teleskopelemente relativ zueinander ist damit verhindert.

Weitere Vorteile und Einzelheiten der Erfindung werden anhand des in den schematischen Figuren dargestellten Ausführungsbeispiels näher erläutert. Dabei zeigt
- Figur 1: einen erfindungsgemäßen Gabelstapler in Seitenansicht,
- Figur 2: die Führung für die Aufstandsfläche in ausgezogener Stellung,
- Figur 3: die Anordnung gemäß Fig. 2 in Draufsicht,
- Figur 4: die Führung für die Aufstandsfläche in eingeschobener Stellung,
- Figur 5: einen Querschnitt durch die Führung.

Figur 1 zeigt einen erfindungsgemäßen Gabelstapler in Seitenansicht. Das tragende Element des Gabelstaplers ist ein Fahrzeugrahmen 1. Vorne am Gabelstapler ist ein Hubgerüst 2 mit einem nach oben und unten bewegbaren Lastaufnahmemittel 3 befestigt. Am hinteren Ende des Gabelstaplers befindet sich ein Heckgewicht 4.

In einem Freiraum des Fahrzeugrahmens befindet sich ein seitlich offenes Batteriefach 7, in dem ein Batterieblock 5 angeordnet ist. Der Batterieblock 5 steht auf einer Aufstandsfläche 8 auf, welche erfindungsgemäß mittels einer teleskopischen Führung 6 in seitlicher Richtung aus dem Batteriefach 7 heraus bewegt werden kann. Die Führung 6 umfasst ein mit dem Fahrzeugrahmen 1 verbundenes Grundelement 10, in dem ein erstes Teleskopelement 11 verschiebbar geführt ist. Ein zweites Teleskopelement 12 wiederum ist in dem ersten Teleskopelement 11 verschiebbar geführt. Das zweite Teleskopelement 12 bildet mit der Aufstandsfläche 8 ein gemeinsames Bauteil.

An der Aufstandsfläche 8 - oder in einer anderen möglichen Ausführungsform direkt an dem zweiten Teleskopelement 12 - ist eine ausfahrbare Stütze 13 befestigt. Solange sich die Aufstandsfläche 8 innerhalb des Fahrzeugrahmens 1 befindet, ist die Stütze 13 eingefahren und befindet sich innerhalb der Fahrzeugkontur. Sobald sich die Stütze 13 außerhalb des Fahrzeugrahmens 1 befindet, fährt sie automatisch aus und stützt die Gewichtskraft des Batterieblocks 5 direkt an der Fahrbahn 9 ab. Am unteren Ende der Stütze 13 befindet sich eine Rolle, die während der Ausfahrbewegung des zweiten Teleskopelements 12 auf der Fahrbahn 9 abrollt.

In Figur 2 ist die Führung 6 der vollständig ausgezogenen Aufstandsfläche 8 in Seitenansicht dargestellt. Das Grundelement 10, das nicht in seiner vollständigen Länge dargestellt ist, befindet sich am linken Ende der Darstellung. Das Grundelement 10 ist nicht bewegbar am Fahrzeugrahmen (Fig. 1, Pos. 1) befestigt. Mittels eines ersten Gleitelements 21 ist das erste Teleskopelement 11 an dem Grundelement 10 geführt. Dabei ist das erste Gleitelement 21 an dem ersten Teleskopelement 11 befestigt und kann relativ zu dem Grundelement 10 nach in der Zeichnung links und rechts verschoben werden. Zusätzlich ermöglicht das erste Gleitelement 21 eine Schwenkbewegung des ersten Teleskopelements 11 um eine senkrecht zur Zeichenebene ausgerichtete Achse 14.

Das zweite Teleskopelement 12 ist an dem ersten Teleskopelement 11 mittels des zweiten Gleitelements 22 verschiebbar geführt. Hierbei sind die beiden in der Zeichnung linken Teile des Gleitelements 22 an dem zweiten Teleskopelement 12 befestigt, während die beiden in der Zeichnung rechten Teile des Gleitelements 22 an dem ersten Teleskopelement 11 befestigt sind. Das zweite Gleitelement 22 ermöglicht eine translatorische Schiebebewegung des zweiten Teleskopelements 12 relativ zum ersten Teleskopelement 11, jedoch keine Rotationsbewegung.

Weiter zu erkennen ist die Stütze 13, die an dem zweiten Teleskopelement 12 befestigt ist und dieses an der Fahrbahn 9 abstützt. Dargestellt ist die Stütze 13 in ausgefahrener Stellung, in der sie ein Abkippen der ausgefahrenen Teleskopelemente 11, 12 um die Achse 14 verhindert. Die Stütze 13 trägt dann auch zumindest einen Teil der Gewichtskraft eines auf der Aufstandsfläche 8 befindlichen Batterieblocks. Ein ebenfalls dargestelltes Abstützelement 23 ist bei ausgezogener Führung 6 ohne Funktion.

In Figur 3 ist die Anordnung gemäß Figur 2 in Draufsicht dargestellt. Eine Symmetrielinie 30 verdeutlicht die achsensymmetrische Ausbildung der Anordnung. Der Einfachheit halber ist jedoch von dem Grundelement 10, dem ersten Teleskopelement 11 und dem zweiten Teleskopelement 12 jeweils nur eine Hälfte dargestellt. Zu erkennen sind ebenfalls das erste Gleitelement 21 mit dem rotatorischen Freiheitsgrad um die Achse 14, sowie die beiden Teile des zweiten Gleitelements 22.

Figur 4 zeigt die Führung 6 für die Aufstandsfläche 8 - in einer Seitenansicht entsprechend Figur 2 - in eingeschobener Stellung, bei der sich die Aufstandsfläche 8 vollständig innerhalb des Batteriefachs (Fig. 1, Pos. 7) befindet. Zu erkennen sind das Grundelement 10; das erste Teleskopelement 11 sowie das zweite Teleskopelement 12, die alle ineinander geschoben sind. Ebenso zu erkennen sind das erste Gleitelement 21, die beiden Teile des zweiten Gleitelements 22 sowie das Abstützelement 23, welches an dem ersten Teleskopelement 11 befestigt ist. Das Abstützelement 23 stützt bei eingeschobener Führung 6 das erste Teleskopelement 11 an dem Grundelement 10 ab, sodass das erste Teleskopelement 11 nicht um die Achse 14 abkippt. Die Stütze 13 ist bei eingeschobener Führung 6 eingefahren und nimmt keine Kräfte auf.

In Figur 5 ist ein Querschnitt durch die Führung 6 dargestellt, wobei wie in Fig. 3 nur eine Hälfte der symmetrischen Anordnung dargestellt ist. Zu erkennen sind das Grundelement 10, das erste Teleskopelement 11, das zweite Teleskopelement 12 und die Aufstandsfläche 8. Das erste Gleitelement 21 ermöglicht an einer Gleitfläche 21 a eine translatorische Verschiebung und an einer Gleitfläche 21 b eine rotatorische Bewegung. Das zweite Gleitelement 22 befindet sich zwischen dem ersten Teleskopelement 11 und dem zweiten Teleskopelement 12 und ermöglicht ausschließlich eine translatorische Relativbewegung.

## Patentansprüche

1. Gabelstapler mit einem Fahrzeugrahmen (1), der eine seitliche Entnahmeöffnung für einen Batterieblock (5) aufweist, wobei für den Batterieblock (5) eine Aufstandsfläche (8) vorgesehen ist, welche mittels einer Führung (6) zwischen einer Betriebsposition, in der sich die Aufstandsfläche (8) vollständig innerhalb des Fahrzeugrahmens (1) befindet, und einer Batteriewechselposition, in der sich die Aufstandsfläche (8) vollständig außerhalb des Fahrzeugrahmens (1) befindet, bewegbar ist, **dadurch gekennzeichnet, dass** die Führung (6) als teleskopische Gleitführung ausgebildet ist, wobei ein Grundelement (10) der Führung (6) starr mit dem Fahrzeugrahmen (1) verbunden ist, ein erstes Teleskopelement (11) an dem Grundelement (10) mittels eines ersten Gleitelements (21) bewegbar geführt ist und ein zweites Teleskopelement (12) an dem ersten Teleskopelement (11) mittels eines zweiten Gleitelements (22) bewegbar geführt ist und die Aufstandsfläche (8) an dem zweiten Teleskopelement (12) befestigt ist.

2. Gabelstapler nach Anspruch 1, **dadurch gekennzeichnet, dass** das erste Gleitelement (21) eine im Wesentlichen horizontale Linearbewegung des ersten Teleskopelements (11) und eine Schwenkbewegung des ersten Teleskopelements (11) um eine im Wesentlichen horizontale Achse (14) ermöglicht.

3. Gabelstapler nach Anspruch 1 oder 2, **dadurch gekennzeichnet, dass** das erste Gleitelement (21) an dem - bei vollständig eingeschobener Aufstandsfläche (8) von der Entnahmeöffnung aus betrachtet - hinteren Ende des ersten Teleskopelements (11) befestigt ist.

4. Gabelstapler nach einem der Ansprüche 1 bis 3, **dadurch gekennzeichnet, dass** ein Abstützelement (23) vorgesehen ist, das an dem ersten Teleskopelement (11) angeordnet ist und mit dem ein Teil der Gewichtskraft des Batterieblocks (5) an dem Grundelement (10) abstützbar ist.

5. Gabelstapler nach Anspruch 4, **dadurch gekennzeichnet, dass** das Abstützelement (23) an dem - bei vollständig eingeschobener Aufstandsfläche (8) von der Entnahmeöffnung aus betrachtet - vorderen Ende des ersten Teleskopelements (11) befestigt ist.

6. Gabelstapler nach einem der Ansprüche 1 bis 5, **dadurch gekennzeichnet, dass** eine ausfahrbare Stütze (13) vorgesehenen ist, die an dem zweiten Teleskopelement (12) angeordnet ist und mit der ein Teil der Gewichtskraft des Batterieblocks (5) an einer Fahrbahn (9) abstützbar ist.

7. Gabelstapler nach einem der Ansprüche 1 bis 6, **dadurch gekennzeichnet, dass** das zweite Gleitelement (22) ausschließlich eine im Wesentlichen horizontale Linearbewegung des zweiten Teleskopelements (12) relativ zum ersten Teleskopelement (11) ermöglicht.

## Claims

1. Fork-lift truck having a vehicle frame (1) which has a lateral removal opening for a battery block (5), a supporting surface (8) being provided for the battery block (5), which supporting surface (8) can be moved by means of a guide (6) between an operating position, in which the supporting surface (8) is located completely inside the vehicle frame (1), and a battery changing position, in which the supporting surface (8) is located completely outside the vehicle frame (1), **characterized in that** the guide (6) is constructed as a telescopic sliding guide, a base element (10) of the guide (6) being rigidly connected to the vehicle frame (1), a first telescopic element (11) being guided on the base element (10) by means of a first sliding element (21) such that it can move, and a second telescopic element (12) being guided on the first telescopic element (11) by means of a second sliding element (22) such that it can move, and the supporting surface (8) being fixed to the second telescopic element (12).

2. Fork-lift truck according to Claim 1, **characterized in that** the first sliding element (21) permits a substantially horizontal linear movement of the first telescopic element (11) and a pivoting movement of the first telescopic element (11) about a substantially horizontal axis (14).

3. Fork-lift truck according to Claim 1 or 2, **characterized in that** the first sliding element (21) is fixed to the rear end of the first telescopic element (11), as seen from the removal opening when the supporting surface (8) is pushed completely in.

4. Fork-lift truck according to one of Claims 1 to 3, **characterized in that** a supporting element (23) is provided, which is arranged on the first telescopic element (11) and with which part of the weight of the battery block (5) can be supported on the base element (10).

5. Fork-lift truck according to Claim 4, **characterized in that** the supporting element (23) is fixed to the front end of the first telescopic element (11), as seen from the removal opening when the supporting surface (8) is pushed completely in.

6. Fork-lift truck according to one of Claims 1 to 5, **characterized in that** an extendable support (13) is provided, which is arranged on the second telescopic element (12) and with which part of the weight of the battery block (5) can be supported on a roadway (9).

7. Fork-lift truck according to one of Claims 1 to 6, **characterized in that** the second sliding element (22) permits only a substantially horizontal linear movement of the second telescopic element (12) relative to the first telescopic element (11).

## Revendications

1. Chariot élévateur à fourche comprenant un châssis de véhicule (1), qui présente une ouverture de prélèvement latérale pour un bloc batterie (5), une surface d'appui (8) étant prévue pour le bloc batterie (5), laquelle peut être déplacée au moyen d'un guidage (6) entre une position fonctionnelle, dans laquelle la surface d'appui (8) se trouve complètement à l'intérieur du châssis de véhicule (1), et une position de changement de batterie, dans laquelle la surface d'appui (8) se trouve complètement en dehors du châssis de véhicule (1), **caractérisé en ce que** le guidage (6) est réalisé sous forme de guidage coulissant télescopique, un élément de base (10) du guidage (6) étant connecté rigidement au châssis de véhicule (1), un premier élément télescopique (11) étant guidé de manière déplaçable sur l'élément de base (10) au moyen d'un premier élément coulissant (21) et un deuxième élément télescopique (12) étant guidé de manière déplaçable sur le premier élément télescopique (11) au moyen d'un deuxième élément coulissant (22) et la surface d'appui (8) étant fixée sur le deuxième élément télescopique (12).

2. Chariot élévateur à fourche selon la revendication 1, **caractérisé en ce que** le premier élément coulissant (21) permet un déplacement linéaire essentiellement horizontal du premier élément télescopique (11) et un mouvement de pivotement du premier élément télescopique (11) autour d'un axe (14) essentiellement horizontal.

3. Chariot élévateur à fourche selon la revendication 1 ou 2, **caractérisé en ce que** le premier élément coulissant (21) est fixé sur l'extrémité arrière - considérée lorsque la surface d'appui (8) est complètement enfoncée depuis l'ouverture de prélèvement - du premier élément télescopique (11).

4. Chariot élévateur à fourche selon l'une quelconque des revendications 1 à 3, **caractérisé en ce qu'**un élément d'appui (23) est prévu, lequel est disposé sur le premier élément télescopique (11) et avec lequel une partie du poids du bloc batterie (5) peut être supportée sur l'élément de base (10).

5. Chariot élévateur à fourche selon la revendication 4, **caractérisé en ce que** l'élément d'appui (23) est fixé sur l'extrémité avant - considérée lorsque la surface d'appui (8) est complètement enfoncée depuis l'ouverture de prélèvement - du premier élément télescopique (11).

6. Chariot élévateur à fourche selon l'une quelconque des revendications 1 à 5, **caractérisé en ce qu'**un support déployable (13) est prévu, lequel est disposé sur le deuxième élément télescopique (12) et avec lequel une partie du poids du bloc batterie (5) peut être supportée sur une voie de circulation (9).

7. Chariot élévateur à fourche selon l'une quelconque des revendications 1 à 6, **caractérisé en ce que** le deuxième élément coulissant (22) permet exclusivement un déplacement linéaire essentiellement horizontal du deuxième élément télescopique (12) par rapport au premier élément télescopique (11).
